Europäisches Patentamt

European Patent Office

Office européen des brevets

(19)

(11) Veröffentlichungsnummer : **0 087 623**
**B1**

(12) **EUROPÄISCHE PATENTSCHRIFT**

(45) Veröffentlichungstag der Patentschrift :
02.01.86

(51) Int. Cl.⁴ : **F 16 H 25/24, F 16 H 25/22**

(21) Anmeldenummer : **83101197.8**

(22) Anmeldetag : **08.02.83**

(54) Verfahren zur Herstellung einer auf einer Gewindespindel laufenden Doppelmutter.

(30) Priorität : **02.03.82 DE 3207566**

(43) Veröffentlichungstag der Anmeldung :
**07.09.83 Patentblatt 83/36**

(45) Bekanntmachung des Hinweises auf die Patenterteilung : **02.01.86 Patentblatt 86/01**

(84) Benannte Vertragsstaaten :
**CH DE FR GB IT LI**

(56) Entgegenhaltungen :
**DE-A- 2 533 996**
**DE-B- 2 453 635**
**US-A- 3 059 494**
**Patent Abstracts of Japan, Band 6, Nr. 201, 13. Oktober 1982**
**Patent Abstracts of Japan, Band 5, Nr. 116, 25. Juli 1981**

(73) Patentinhaber : **Deutsche Star Kugelhalter GmbH**
**Ernst-Sachs-Strasse 90**
**D-8720 Schweinfurt 2 (DE)**

(72) Erfinder : **Blaurock, Günter**
**Wielandstrasse 7**
**D-8721 Niederwerrn (DE)**
Erfinder : **Albert, Ernst**
**Albrecht-Söller-Strasse 12**
**D-8729 Sand/Main (DE)**
Erfinder : **Blaurock, Werner**
**Hainleinstrasse 76**
**D-8721 Niederwerrn (DE)**
Erfinder : **Peichl, Benno**
**Kreuzstrasse 70**
**D-8722 Bergrheinfeld (DE)**
Erfinder : **Reichert, Klaus**
**Im Krautgarten 11**
**D-8730 Bad Kissingen-Garitz (DE)**
Erfinder : **Stender, Hans-Georg**
**Armin-Knab-Strasse 6**
**D-8721 Hambach (DE)**
Erfinder : **Schlereth, Rudolf**
**An der Klostermauer 12**
**D-8731 Frauenroth (DE)**

(74) Vertreter : **Weickmann, Heinrich, Dipl.-Ing. et al**
**Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel**
**Postfach 860820**
**D-8000 München 86 (DE)**

## Beschreibung

Die Erfindung betrifft ein Verfahren zur Herstellung einer auf einer Gewindespindel laufenden Doppelmutter, bei dem man die Einzelmuttern auf der Gewindespindel zur Einstellung eines gewünschten Spiels bzw. einer gewünschten Vorspannung gegeneinander verdreht und anschließend ggf. über einen Zwischenring dadurch formschlüssig aneinander festlegt, daß man wenigstens einen Sperrbolzen in die Doppelmutter einsetzt, der benachbarte Ausnehmungen der Einzelmuttern und ggf. des Zwischenrings durchsetzt.

Ein Verfahren dieser Art ist beispielsweise aus der DE-AS-2 533 996 bekannt. Hierbei sind sämtliche Ausnehmungen bereits vor dem Aufschrauben und Verspannen der Einzelmuttern auf der Gewindespindel vorgefertigt. Beim Verspannen müssen die beiden Einzelmuttern gerade so weit gegeneinander verdreht werden, daß die beiden Aufnahmebohrungen 12 und 13 dieser Muttern zur Deckung mit einem Aufnahmelochpaar 10, 11 des Zwischenringes 9 gelangen. Es ist demnach lediglich eine diskontinuierliche Drehverstellung möglich, wenn auch in relativ kleinen Schritten, da der Zwischenring eine Reihe von Aufnahmelochpaaren unterschiedlicher Anordnung aufweist. Nachteilig sind auch die relativ hohen Herstellungskosten des mit einer Vielzahl von Aufnahmebohrungen zu versehenden Zwischenringes. Entsprechendes gilt für die aus der DE-B-2 453 635 bekannte Lösung, bei der der Zwischenring 18 an seinen beiden Stirnseiten mit in axialer Richtung offenen Ausnehmungen 26a und 26b versehen ist, wobei dann in der gewählten Drehstellung wiederum die beiden in die Einzelmuttern eingeschraubten Sperrbolzen 32a und 30a in jeweils eine der vorgefertigten Ausnehmungen eingreifen. Auch hier ist beim Einsetzen der Sperrbolzen darauf zu achten, daß der Zwischenring gegenüber den Einzelmuttern richtig orientiert ist.

Demgegenüber ist es Aufgabe der Erfindung, ein Verfahren der eingangs genannten Art bereitzustellen, welches eine schnelle und einfache kontinuierliche Dreheinstellung der Einzelmuttern bei geringen Teile-Herstellungskosten ermöglicht unter Beibehaltung der formschlüssigen Verdrehsicherung mittels Sperrbolzen.

Diese Aufgabe wird gemäß Anspruch 1 dadurch gelöst, daß man wenigstens eine der Ausnehmungen erst nach dem Verdrehen der Einzelmuttern auf der Gewindespindel herstellt. In beliebiger gegenseitiger Drehlage können die Einzelmuttern also aneinander festgelegt werden, indem die wenigstens eine Ausnehmung nunmehr hergestellt und der Sperrbolzen eingesetzt wird. Das ggf. mühsame Zur-Deckungbringen von Ausnehmungspaaren eines Zwischenrings mit Ausnehmungen der Einzelmuttern entfällt. Auch brauchen nur diejenigen Ausnehmungen hergestellt werden, die schließlich zum Einstecken der Bolzen benutzt werden.

Aus der DE-AS-2 940 762 ist es bekannt, die Einzelmuttern dadurch in der entsprechenden Drehstellung aneinander festzulegen, daß ein an einer der Einzelmuttern festgeschraubtes mit einer axialen Feinverzahnung 6 versehenes Arretierteil gegen eine entsprechende Verzahnung an der zugewandten Stirnseite der anderen Einzelmutter andrückt. Eine kontinuierliche Dreheinstellung ist auch hier nicht möglich. Je feiner man die Verzahnung wählt um möglichst viele unterschiedliche Dreheinstellungsmöglichkeiten zu erhalten, desto größer wird die Gefahr, daß sich die Einzelmuttern während des Betriebes ungewollt gegeneinander verdrehen. Diese Gefahr besteht jedoch praktisch nicht bei einer Verdrehsicherung mittels in Ausnehmungen formschlüssig eingreifender Sperrbolzen.

Aus dem DE-U-7 708 184 ist es bekannt, in einer Nute in einer der beiden Einzelmuttern eine Paßfeder spielfrei festzuschrauben, die in eine breitere Nute in der zweiten Mutter hineinragt und dort mittels tangential verlaufender Schrauben in unterschiedlichen Lagen festgelegt werden kann. In einem relativ kleinen Winkelbereich ist demnach bei dieser bekannten Anordnung eine kontinuierliche Drehlageeinstellung möglich ; der Teile-Herstellungsaufwand ist jedoch relativ hoch ; auch ist diese Lösung nur dann anwendbar, wenn die Muttern relativ große Wandstärke haben. In vielen Anwendungsfällen kommt es jedoch auf möglichst geringe Wandstärke an.

Aus der DE-AS-2 349 958 ist es schließlich bekannt, die beiden Einzelmuttern mittels eines geschlossenen Zwischenrings miteinander drehfest zu verbinden, der am Außenumfang jeweils eines Endabschnittes beider Einzelmuttern mit Preßpassung anliegt. Nachteilig an dieser bekannten Lösung sind vor allem die relativ hohen Teile-Herstellungskosten aufgrund der hohen Fertigungsgenauigkeit, die die Preßpassung erfordert. Bei nicht ausreichender Fertigungsgenauigkeit besteht die Gefahr, daß die reibungskraftschlüssig aneinander festgelegten Teile sich beim Betrieb ungewollt gegeneinander verdrehen. Aus der DE-AS-2 349 958 ist weiterhin ein geschlitzter Zwischenring 9 bekannt, dessen Durchmesser zur Herstellung eines Preßsitzes auf beiden Einzelmuttern mittels einer tangentialen Schraube verändert werden kann. Nachteilig hieran sind wiederum die relativ hohen Teile-Herstellungskosten, die unter Umständen nicht ausreichende Sicherheit gegen selbsttätige Verdrehung und schließlich der zusätzliche Raumbedarf in radialer Richtung. Gemäß den Patent Abstracts of Japan ; Band 6, Nr. 201, 13. Okt. 1982 (JP-A-75 107 461) sind zwei gegenseitig verspannte Einzelmuttern dadurch aneinander festgeregt, daß man die beiden Einzelmuttern miteinander verklebt. Hierzu wird der Klebstoff in vorgefertigte, entsprechend der jeweiligen Drehstellung mehr oder minder miteinander fluchtende, einander gegenüberliegende Ausnehmungen am Umfangsrand der Einzelmuttern gegeben. Gegenüber der Drehsicherung mittels Sperrbolzen ist die Drehsicherung mittels Verklebung weniger zuverlässig. Aus « Patent Abstracts of Japan », Band 5, Nr. 116, 25. Juli 1981 (JP-A-5 655 753) ist es schließlich bekannt, zwei verspannte Einzelmuttern dadurch in ihrer gegenseitigen Drehstellung zu sichern, daß man sie mit einer beide Einzelmuttern umschließenden Hülse verschraubt. Ein vom Schraubengewindeschaft durchsetzter vorgefertigter Umfangsschlitz in der Hülse ermöglicht eine kontinuierliche Herstellung. Die Befestigungsschrauben sind in Einschraubgewinde der Einzelmuttern eingeschraubt.

Die erfindungsgemäße Herstellung der wenigstens einen Ausnehmung nach dem Verdrehen der Einzelmuttern auf der Gewindespindel gestaltet sich besonders einfach, wenn man das entsprechende Teil radial von außen her anbohrt. Zur Verlustsicherung des Sperrbolzens kann man diese Ausnehmung auch mit einem Einschraubgewinde für den Sperrbolzen versehen.

In einer besonders bevorzugten Ausführungsform der Erfindung ist vorgesehen, daß man nach dem Verdrehen der Einzelmuttern auf der Gewindespindel eine radiale Bohrung in der Berührungsebene beider Einzelmuttern herstellt und den Sperrbolzen in diese Bohrung einsetzt. Mit einem einzigen Bohrvorgang können daher die beiden Ausnehmungen in den Einzelmuttern hergestellt werden, die in diesem Falle halbzylindrisch sind und sich zu einer zylindrischen Ausnehmung für den Sperrbolzen ergänzen. Der Sperrbolzen legt die beiden Einzelmuttern unmittelbar aneinander fest, so daß ein Zwischenring oder ein die beiden Einzelmuttern umgreifendes Gehäuse entfallen kann.

Die Erfindung betrifft auch einen Schraubtrieb, insbesondere Kugelschraubtrieb, mit einer Gewindespindel und einer auf der Gewindespindel laufenden Doppelmutter, deren beide Einzelmuttern zur Einstellung eines gewünschten Spiels bzw. einer gewünschten Vorspannung auf der Gewindespindel gegeneinander verdrehbar und zur Verhinderung einer selbsttätigen gegenseitigen Verdrehung mittels wenigstens eines in eine Ausnehmung an einer der Einzelmuttern einsteckbaren im wesentlichen radialen Sperrbolzens miteinander formschlüssig verbindbar sind, hergestellt nach dem erfindungsgemässen Verfahren. Ein Schraubtrieb dieser Art ist ansich z. B. aus der DE-A-2 533 996 bekannt, wenn auch in anderer Weise hergestellt, wie eingangs bereits ausgeführt worden ist.

Erfindungsgemäß wird gemäß Anspruch 4 vorgeschlagen, daß in der zur gegenseitigen Anlage kommenden Stirnfläche jeder Einzelmutter nur je eine einzige Teilausnehmung vorgesehen ist, die in der vorgesehenen Drehstellung der jeweils anderen Teilausnehmung unter Bildung der Ausnehmung für den Sperrbolzen gegenüberliegt. Diese Doppelmutter kommt mit wenigen Teilen aus, da lediglich die beiden Einzelmuttern sowie zumindest ein Sperrbolzen erforderlich sind. Das der Drehlagenfixierung dienende Teil, nämlich der bzw. die Sperrbolzen sind kostengünstig herzustellen. Eine kontinuierliche Drehlageneinstellung ist möglich, da gemäß dem erfindungsgemäßen Verfahren wenigstens eine der Teilausnehmungen erst dann hergestellt wird, wenn die beiden Teilmuttern bereits gegeneinander verdreht sind. Die Doppelmutter benötigt in axialer Richtung nur wenig Einbauraum, da die Sperrbolzen bündig mit dem Mutternaußenumfang abschließen können und somit kein der Drehsicherung dienendes Bauteil über den Mutternumfang vorsteht. Ein Mutterngehäuse ist nicht erforderlich. Die Sperrbolzen haben vergleichsweise großen Durchmesser und liefern daher eine formschlüssige Verdreh-Sicherung, die auch bei auf die Einzelmuttern einwirkenden Radial- und Axialschlägen zuverlässig hält. Die aufgrund der Verspannung in axialer Richtung an ihren Stirnflächen gegeneinander gedrückten Einzelmuttern bilden zusammen mit dem Sperrbolzen eine mechanisch stabile Doppelmutternanordnung.

Bevorzugt sind die im wesentlichen radial verlaufenden Teilausnehmungen im wesentlichen halbzylindrisch ausgebildet. Dies hat den Vorteil, daß man die Teilausnehmungen durch eine einzige Anbohrung gleichzeitig herstellen kann und zwar durch Anbohren der gegeneinander verdrehten Teilmuttern in der Berührebene beider Teilmuttern.

Die beiden Teilmuttern können gegen eine Relativbewegung in der Berührebene in einfacher Weise dadurch gesichert werden, daß mehrere, vorzugsweise zwei oder drei Ausnehmungen im Umfangsbereich der Doppelmutter vorgesehen sind.

In einer weiteren Ausführungsform der Erfindung ist eine Achszentrierung beider Einzelmuttern vorgesehen, vorzugsweise in Form eines Zentrierringes. In diesem Falle genügt eine einzige Ausnehmung für einen Sperrbolzen. Die Zentrierung verhindert, daß Radialschläge zu einem Versatz der beiden Muttern führen bzw. zu einem Verschwenken der beiden Muttern um diesen einen Sperrbolzen.

Die Sperrbolzen stecken mehr oder weniger lose in den entsprechenden Ausnehmungen, um zu verhindern, daß die beiden Einzelmuttern beim Einstecken der Sperrbolzen voneinander auch nur geringfügig in axialer Richtung entfernt werden, was zu einer Veränderung der Vorspannung und darüber hinaus auch dazu führt, daß die Achsen der Einzelmuttern nicht mehr zusammenfallen. Die in die Ausnehmungen eingesteckten Sperrbolzen müssen daher gegen Verlust gesichert werden.

In einer ersten Ausführungsform der Erfindung erreicht man dies dadurch, daß der Sperrbolzen in die Ausnehmung eingeklebt ist. Um auch im Falle einer im wesentlichen zylindrischen Ausnehmung und eines im wesentlichen zylindrischen Sperrbolzens unter allen Umständen einen Verlust des Sperrbolzens auszuschließen, wird vorgeschlagen, daß die Ausnehmung mit einer Hinterschneidung und der Sperrbolzen mit Aussparungen vorzugsweise in Form einer Umfangsnut versehen ist.

In einer anderen Ausführungsform der Erfindung ist vorgesehen, daß der Sperrbolzen einen in einen Zwischenring ggf. den Zentrierring einschraubbaren Gewindeabschnitt aufweist. Hierbei wird vorgeschlagen, daß der Zwischenring von den Einzelmuttern umgriffen wird, und daß die zwischen dem Gewindeabschnitt und einem sich anschließenden durchmesservergrößerten, die Ausnehmung ausfüllenden Zylinderabschnitt gebildeten Schulter am Zwischenring anliegt. Die Doppelmutter bietet in diesem Falle ein geschlossenes Äußeres ; der eingeschraubte Sperrbolzen übt keinerlei radiale Kräfte auf die eine oder andere Einzelmutter aus, so daß es von daher zu keinen unerwünschten Verspannungen der Einzelmuttern kommt.

In einer weiteren Ausführungsform ist ein die Einzelmuttern umgreifender Sicherungsring zur Verlustsicherung des Sperrbolzens vorgesehen. Hierbei kann der Sicherungsring in einer Umfangsnut der Doppelmutter axial verschiebbar sein zwischen einer die Ausnehmung freigebenden ersten Endstellung und einer die Ausnehmung abdeckenden zweiten Endstellung. Zur Sicherung bzw. Entsicherung der eingesteckten Sperrbolzen muß der Sicherungsring lediglich entsprechend axial verschoben werden. Um hierbei ein selbsttätiges Bewegen aus der zweiten Endstellung zu verhindern, wird vorgeschlagen, daß der Sicherungsring in dieser zweiten Endstellung im Festsitz an einer der Einzelmuttern festgelegt ist.

Der Sicherungsring kann jedoch auch mit einer der Öffnung der Ausnehmung angepaßten Aussparung versehen und in Umfangsrichtung der Doppelmutter derart verschiebbar sein, daß in einer ersten Drehstellung die Ausnehmung durch die Aussparung hindurch zugänglich und in einer zweiten Drehstellung vom Sicherungsring abgedeckt ist. Die Fixierung des Sicherungsrings in der zweiten Drehstellung kann durch Prägen, wie z. B. Umbördeln oder Anstauchen des Sicherungsrings an einer der Einzelmuttern vorgenommen werden.

Einer weiteren Ausführungsform der Erfindung gemäß ist der Sperrbolzen mit wenigstens einer Eingriffsausformung an seinem Außenumfang ausgebildet und die Ausnehmung mit einer komplementären Eingriffsausformung, derart, daß bei eingestecktem Sperrbolzen die Eingriffsausformungen ineinandergreifen. Bevorzugt wird die Eingriffsausformung des Sperrbolzens von einem Umfangswulst und die komplementäre Eingriffsausformung von einer Innenumfangsnut gebildet. Beim Einstecken des Sperrbolzens führt der über den Außenumfang des Sperrbolzens vorstehende Umfangswulst zwar kurzzeitig dazu, daß beide Einzelmuttern voneinander entfernt werden ; schließlich rastet der Innenumfangswulst jedoch in die Innenumfangsnut ein, so daß die beiden Einzelmuttern wieder unmittelbar aneinander anliegen.

Man kann jedoch auch den vor dem Einsetzen durchgehend zylindrischen Sperrbolzen an seinem Einsteckende mit einer derartigen materialsschwächung versehen, daß sich aufgrund des Stauchens des Bolzens beim Einschlagen in die Ausnehmung sich die Eingriffsausformung des Sperrbolzens ausbildet. Die stauchfähige Materialschwächung kann beispielsweise dadurch erreicht werden, daß man einen Hohlkegel in der Stirnfläche des Einsteckendes des Sperrbolzens ausformt.

In einer weiteren Ausführungsform der Erfindung ist der Sperrbolzen durch ein an eine der Einzelmuttern festschraubbares Sicherungselement gegen Verlust gesichert. Dieses kann von einer Sicherungsschraube gebildet sein, deren Kopf am äußeren Ende des in die Ausnehmung eingesteckten Sperrbolzens anliegt.

Die Erfindung betrifft schließlich einen Schraubtrieb, insbesondere Kugelschraubtrieb mit einer Gewindespindel und einer auf der Gewindespindel laufenden Doppelmutter, deren beide Einzelmuttern zur Einstellung eines gewünschten Spiels bzw. einer gewünschten Vorspannung auf der Gewindespindel gegeneinander verdrehbar und zur Verhinderung einer selbsttätigen gegenseitigen Verdrehung mittels wenigstens eines in eine Ausnehmung an einer der Einzelmuttern einzusteckenden im wesentlichen radialen Sperrbolzens miteinander formschlüssig verbindbar sind, wobei ein von den Einzelmuttern umgriffener Zwischenring vorgesehen ist mit einer ersten Ausnehmung in radialer Flucht mit einer durchgehenden Ausnehmung einer der Einzelmuttern und mit einer zweiten Ausnehmung in radialer Flucht mit einer durchgehenden Ausnehmung der anderen Einzelmutter für je einen Sperrbolzen, und wobei jeder Sperrbolzen in ein Einschraubgewinde in einer der fluchtenden Ausnehmungen einschraubbar ist, hergestellt nach dem erfindungsgemäßen Verfahren. Ein Schraubtrieb dieser Art ist ansich aus der DE-B-2 453 635 bekannt, wenn auch in anderer Weise hergestellt, wie eingangs bereits ausgeführt worden ist.

Hierbei wird gemäß Anspruch 21 vorgeschlagen, daß die erste und zweite Ausnehmung des Zwischenrings mit dem Einschraubgewinde für die Sperrbolzen versehen sind, und daß die Ausnehmungen der Einzelmuttern durchgehend zylindrisch ausgebildet sind zur Aufnahme der zylindrischen Köpfe der Sperrbolzen. Dies ermöglicht es, die erste und/oder die zweite Ausnehmung des Zwischenrings erst dann herzustellen, wenn die beiden Einzelmuttern bereits auf der Gewindespindel verspannt sind. In diesem Falle kann die durchgehend zylindrische Ausnehmung der entsprechenden Einzelmutter als Führung für das Bohrwerkzeug dienen. Erleichtert wird diese Nacharbeitung dadurch, daß der Zwischenring aus weicherem Material hergestellt sein kann wie die Einzelmuttern.

Die Erfindung wird im folgenden anhand der Zeichnung an Ausführungsbeispielen erläutert. Es zeigt :

Figur 1A eine Seitenansicht einer ersten Ausführungsform der erfindungsgemäßen Doppelmutter;

Figur 1B einen in die Doppelmutter eingesetzten Sperrbolzen als Detail A der Fig. 1A;

Figur 1C eine Schnittansicht der Doppelmutter gemäß Fig. 1A entlang der Linie IC-IC;

Figur 2 eine Seitenansicht einer zweiten Ausführungsform der Doppelmutter;

Figur 3 bis 5 Detailansichten dreier weiterer Ausführungsformen erfindungsgemäßer Doppelmuttern im Bereich der Berührungsebene der Einzelmuttern;

Figur 6A eine Detailansicht ähnlich Fig. 3 einer weiteren Ausführungsform im Schnitt entlang der Linie VIA in Fig. 6B;

Figur 6B eine Ansicht der Anordnung gemäß Fig. 6A in Richtung des Pfeils VIB;

Figur 7A eine Detailansicht ähnlich Fig. 3 einer weiteren Ausführungsform;

Figur 7B und 7C zwei Ausführungsformen eines in die Doppelmutter gemäß Fig. 7A eines einsetzbaren Sperrbolzens; und

Figur 8 und 9 Detailansichten ähnlich Fig. 3 zweier weiterer Doppelmutter-Ausführungsformen.

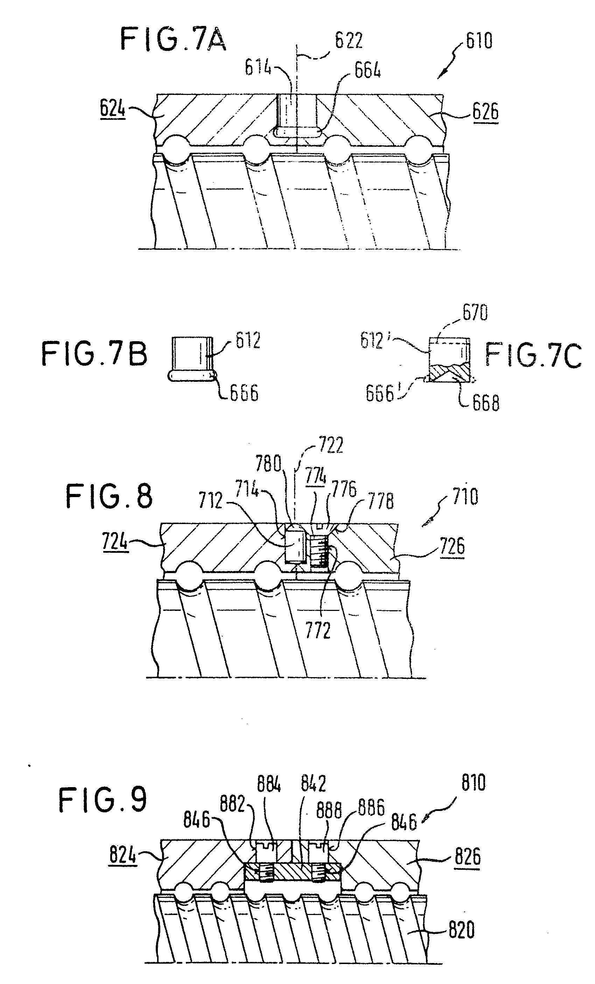

Sämtlichen Ausführungsformen gemäß Fig. 1A bis 9 ist gemeinsam, daß die beiden Einzelmuttern jeder Doppelmutter zur Einstellung eines gewünschten Spieles, z. B. eines Null-Spieles bzw. einer gewünschten Vorspannung auf der Gewindespindel kontinuierlich gegeneinander verdrehbar sind bei unveränderter axialer Lage zueinander, was über die in das Spindelaußengewinde eingreifenden Mutterngewindegänge oder im Falle von Kugelgewindemuttern über die Laufkugeln zu einer entsprechenden axialen Druckspannung führt, die die beiden Einzelmuttern zusammenpreßt. In der gewählten kontinuierlich einstellbaren gegenseitigen Drehstellung werden die Einzelmuttern anschließend formschlüssig gegen weiteres Verdrehen gesichert und zwar dadurch, daß eine Aufnahmebohrung für einen Sperrbolzen in der Berührungsebene beider Einzelmuttern gebohrt wird (Fig. 1A bis 8) oder eine Gewindebohrung in einem beide Einzelmuttern verbindenden Zwischenring (Fig. 9). Ein anschließend in diese Aufnahmebohrung bzw. das Gewinde eingeschraubter Sperrbolzen sichert die Einzelmuttern zuverlässig gegen selbsttätiges Verdrehen. Die in den Figuren dargestellten einzelnen Ausführungsformen unterscheiden sich im wesentlichen in der Art und Weise, wie der in die Aufnahmebohrung eingesteckte Sperrbolzen gegen ein Herausfallen gesichert ist.

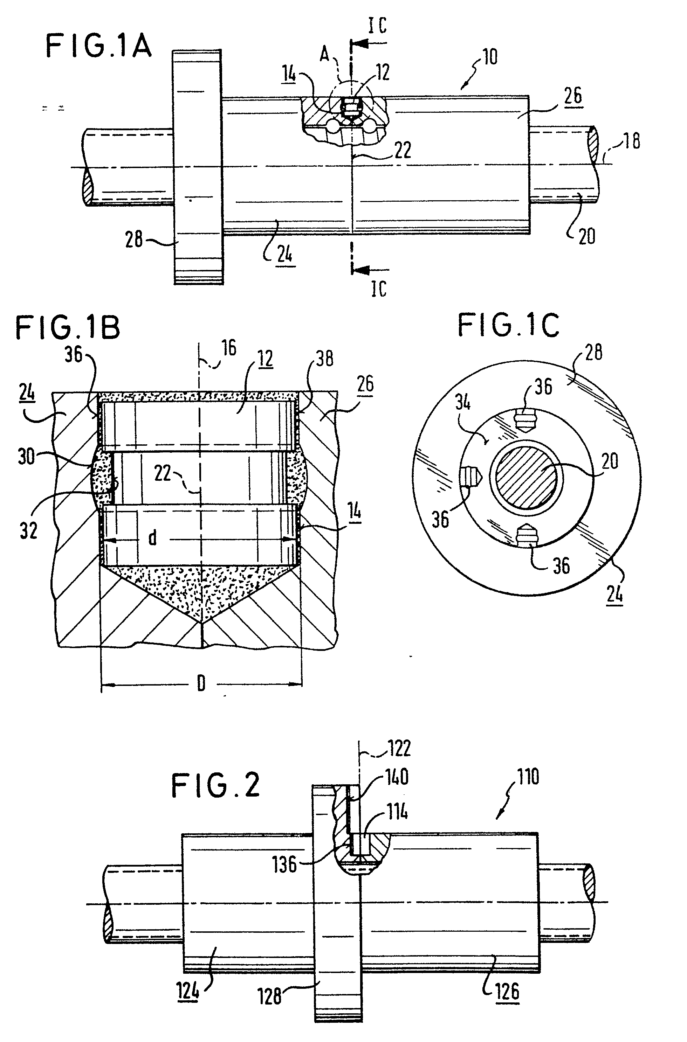

Bei der in den Fig. 1A bis 1C dargestellten Doppelmutter 10 ist der mit 12 bezeichnete Sperrbolzen in die Aufnahmebohrung 14 eingeklebt. Man erkennt in Fig. 1B, daß die Bohrungsmittellinie 16 der Aufnahmebohrung 14 radial zur Achse 18 der Gewindespindel 20 verläuft und in der Berührungsebene 22 der Einzelmuttern 24 und 26 liegt. In dieser Ebene 22 liegen die radialen Stirnflächen beider Einzelmuttern 24 und 26 aneinander an. Man erkennt in Fig. 1A, daß die linke Einzelmutter 24 einen Befestigungsflansch 28 zur Verbindung mit einem vom Schraubtrieb gemäß Fig. 1A zu bewegenden Maschinenelement trägt.

Wie in der Detaildarstellung gemäß Fig. 1B vergrößert angedeutet, ist der Durchmesser d des Sperrbolzens 12 geringfügig kleiner als der Durchmesser D der zylindrischen Aufnahmebohrung 14.

Auf jeden Fall ist der Durchmesser d nicht merklich größer wie der Durchmesser D, um auszuschließen, daß beim Einsetzen des Sperrbolzens 12 sich in diesem Bereich die beiden Einzelmuttern 24 und 26 auch nur geringfügig voneinander entfernen, was zu einer Veränderung der eingestellten Verspannung bzw. des eingestellten Spiels führen würde und darüber hinaus zu einem leichten Kippen der Achse der einen oder der anderen Einzelmutter 24 bzw. 26 gegenüber der Achse 18 der Spindel 20, was erhöhte Reibung und damit verschlechterten Wirkungsgrad aber auch erhöhten Verschleiß zur Folge haben würde.

Damit trotz der Spielpassung des Sperrbolzens 12 dieser während des Betriebes nicht aus der Aufnahmebohrung 14 herausfällt, wird dieser in der Aufnahmebohrung 14 mittels Kleber oder Gießharz fixiert. Insbesondere bei Verwendung von Gießharz bestände die Gefahr bei rein zylindrischer Aufnahmebohrung 14 bzw. rein zylindrischem Sperrbolzen 12, daß dieser sich dennoch löst. Dies wird dadurch ausgeschlossen, daß die Aufnahmebohrung 14 mit einer nach außen gewölbten Hinterschneidung 30 und der Sperrbolzen 12 in gleicher Höhe mit einer Umfangsnut 32 versehen wird. Ein Herausfallen des eingegossenen Sperrbolzens 12 ist nicht mehr möglich, da dies eine Verformung des Gießharzes im Bereich zwischen hinterschneidung 30 und Umfangsnut 32 voraussetzen würde.

Da, wie bereits erwähnt, die Aufnahmebohrung 14 genau in die Berührungsebene 16 beider Einzelmuttern 24 und 26 eingebracht worden ist, wird diese einerseits von einer im wesentlichen halbzylindrischen Teilausnehmung 36 in der entsprechenden Stirnfläche 34 der in Fig. 1A linken Doppelmutter 24 sowie einer dieser axial gegenüberliegenden Teilausnehmung 38 in der gegenüberliegenden Stirnfläche der anderen Doppelmutter 26 gebildet. Jede Teilausnehmung 36 und 38 ist zur Bildung der Hinterschneidung 30 mit einer entsprechenden Auswölbung versehen.

Wie Fig. 1C zeigt, sind in der Stirnfläche 34 der Einzelmutter 24 drei derartige Teilausnehmungen 36 eingearbeitet, denen entsprechende Teilausnehmungen in der Einzelmutter 26 zugeordnet sind, so daß insgesamt drei Sperrbolzen 12 in die Doppelmutter 10 einsetzbar sind. Zwei der Bolzen liegen dabei diametral gegenüber; der dritte bildet jeweils 90° mit den anderen. Diese drei Sperrbolzen gewährleisten, daß zwischen den Einzelmuttern 24 und 26 wirkende Radialkräfte sicher von den Bolzen aufgenommen werden und daher nicht zu einem Versetzen bzw.

Verschwenken der beiden Einzelmuttern 24 und 26 gegeneinander führen. Es erübrigt sich daher gesonderte Maßnahmen zur Zentrierung der beiden Einzelmuttern zu treffen, z. B. durch Einsatz eines Zentrierringes. Die Zentrierung ohne Zusatzmaßnahmen kann auch bereits mit zwei Sperrbolzen erzielt werden, wenn diese am Doppelmutternumfang im Winkel von 90°-120° zueinander angeordnet sind.

Die in Fig. 2 dargestellte Doppelmutter 110 unterscheidet sich von der Doppelmutter 10 gemäß Fig. 1A bis 1C lediglich darin, daß eine der beiden Doppelmuttern 124 und 126 nämlich die in Fig. 2 linke Doppelmutter 124 mit ihrem Befestigungsflansch 128 an der anderen Einzelmutter anliegt, so daß sich eine Mittenbefestigung der Doppelmutter 110 am Maschinenteil ergibt. Auch hier liegt die Aufnahmebohrung 114 genau in der Berührungsebene 122 beider Einzelmuttern 124 und 126. Um den Zugang zur Aufnahmebohrung 114 zu erleichtern, setzt sich die zugeordnete Teilausnehmung 136 der Einzelmutter 124 radial nach außen in einer durchmesservergrößerten ebenfalls halbzylindrischen Nut 140 am Flansch 128 fort. Diese Nut 140 kann vorgefertigt sein, um die Herstellung der Aufnahmebohrung 114 nach erfolgter Verspannung der Einzelmuttern 124 und 126 zu erleichtern.

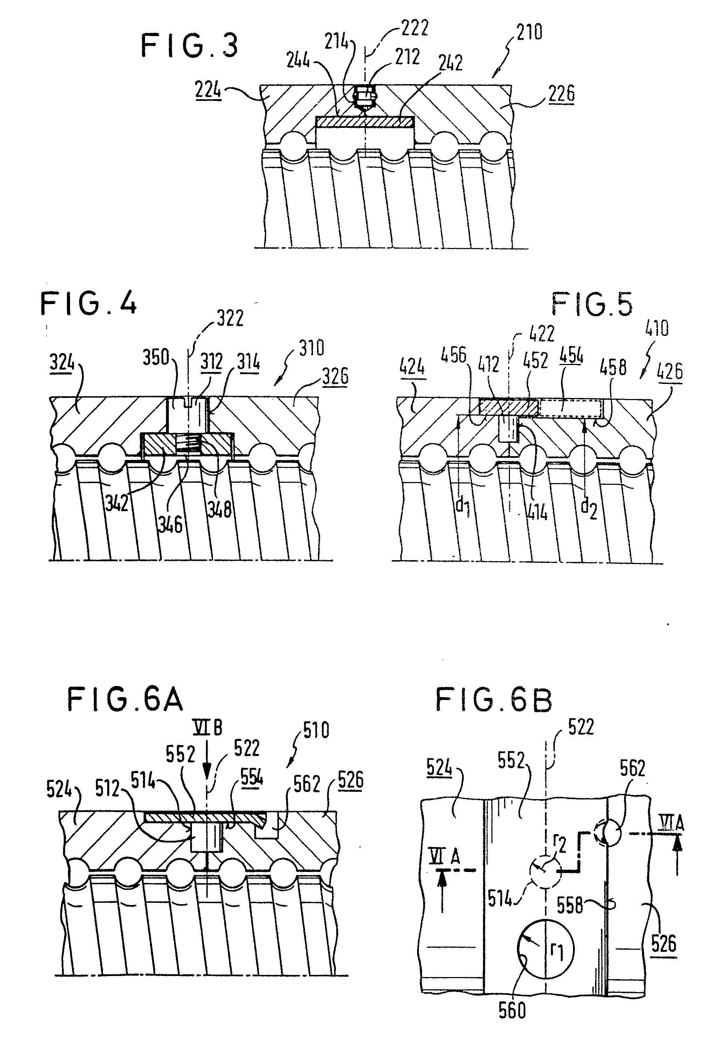

Bei der in Fig. 3 im Detailschnitt gezeigten Doppelmutter 210 ist ein Zentrierring 242 vorgesehen, der in eine von zwei ineinander übergehenden Innenausdrehungen der Einzelmuttern 224 und 226 gebildete Innenumfangsnut 244 der Doppelmutter 210 symmetrisch zur Berührungsebene 222 der Einzelmuttern 224 und 226 eingesetzt ist. Der Zentrierring 242 verhindert eine radiale Relativbewegung der beiden Einzelmuttern 224 und 226 im Bereich der Berührungsebene 222. Es muß daher lediglich nach erfolgter gegenseitiger Verdrehung der Einzelmuttern für eine Verdreh-Sicherung gesorgt werden, wozu ein einziger Sperrbolzen 212 genügt, der in eine nach dem Verdrehen herzustellende Aufnahmebohrung 214 in der Berührungsebene 222 einzusetzen ist. Der Zentrierbolzen 212 ist entsprechend der Anordnung in Fig. 1B geformt ebenso wie die Aufnahmebohrung 214, so daß der in die Bohrung 214 eingeklebte Bolzen 212 zuverlässig hält.

Die Fixierung des Sperrbolzens 312 bei der Doppelmutter 310 gemäß Fig. 4 erfolgt über einen Zwischenring 342, der ebenso wie der Zentrierring 242 gemäß Fig. 3 symmetrisch zur Berührungsebene 322 beider Einzelmuttern 324 und 326 in zylindrische Ausdrehungen der Einzelmuttern eingesetzt ist und daher radial nach außen von den Einzelmuttern abgedeckt ist. In der Berührungsebene 322 ist der Zwischenring 342 mit einem Einschraubgewinde 346 für einen entsprechenden Gewindeabschnitt 348 des Sperrbolzens 312 versehen. Wie Fig. 4 zeigt, schließt sich an diesen Gewindeabschnitt 348 ein durchmesservergrößerter Zylinderabschnitt 350 an, der die als Durchgangsbohrung ausgebildete Aufnahmebohrung 314 ausfüllt. In der in Fig. 4 oberen Stirnseite des Sperrbolzens 312 ist ein Schraubendreherschlitz vorgesehen ; stattdessen kann natürlich auch ein Innenmehrkant o. dgl. in die Stirnfläche eingearbeitet sein, um einen Angriff für ein Drehwerkzeug zum Einschrauben des Schraubbolzens 312 zu bieten.

Nach der Verspannung der beiden Einzelmuttern 324 und 326 durch gegenseitiges Verdrehen wird an beliebiger Umfangsstelle die Aufnahmebohrung 314 in der Berührungsebene 322 hergestellt, woraufhin dann der Zwischenring 342 soweit verdreht wird, bis das Einschraubgewinde 346 genau unterhalb der Aufnahmebohrung 314 zu liegen kommt. Dies kann man z. B. mit Hilfe eines Nagels bewerkstelligen, der durch die relativ große Aufnahmebohrung 314 hindurch am Außenumfang des Zwischenrings 342 angreifen kann. Es ist jedoch auch denkbar, daß man nach der Verspannung der beiden Einzelmuttern 324 und 326 sowohl die Aufnahmebohrung 314 als auch das Einschraubgewinde 346 herstellt.

Der anschließend eingeschraubte Sperrbolzen 312 liegt mit der zwischen dem Gewindeabschnitt 348 und dem durchmesservergrößerten Zylinderabschnitt 350 gebildeten Schulter unmittelbar am Außenumfang des Zwischenrings 342 an, so daß keinerlei radiale Kräfte auf die eine oder andere Einzelmutter vom eingeschraubten Sperrbolzen 314 ausgeübt werden. Der Zwischenring 342 kann gleichzeitig als Zentrierring wie der Ring 242 in Fig. 3 dienen, so daß ein einziger Sperrbolzen 312 ausreicht.

Bei der in Fig. 5 dargestellten Doppelmutter 410 ist der Sperrbolzen 412 in eine wiederum nach dem gegenseitigen Verdrehen herzustellende sacklochartige Aufnahmebohrung 414 in der Berührungsebene 422 mit Spielpassung eingesetzt. Um ein Herausfallen des Sperrbolzens 412 zu verhindern, ist ein Sicherungsring 452 in eine Außenumfangsnut 454 der Doppelmutter 410 im Bereich der Berührungsebene 422 eingesetzt. Die Nut 454 setzt sich daher aus einer stufenartigen Abdrehung 456 der Einzelmutter 424 sowie einer Abdrehung 458 der Einzelmutter 426 zusammen. Die Lage und Breite der zusammengesetzten Nut 454 sowie die Ringbreite des Sicherungsrings 452 sind derart aufeinander abgestimmt, daß der Ring 452 zwischen einer in Fig. 5 mit durchgezogener Linie dargestellten Sicherungs-Endstellung und einer mit unterbrochener Umfangslinie angedeuteten Freigabe-Endstellung axial verschiebbar ist, wobei in der Sicherungs-Endstellung die Aufnahmebohrung 414 vom Ring 452 abgedeckt ist und in der Freigabe-Endstellung freiliegt. In der Freigabe-Endstellung ist der Ring 452 auf dem von der Abdrehung 458 gebildeten zylindrischen Absatz frei verschiebbar ; in der Sicherungs-Endstellung dagegen besteht ein Festsitz zwischen Ring 452 und dem entsprechenden zylindrischen Absatz der Abdrehung 456 der anderen Einzelmutter 424, was durch eine geringfügige Vergrößerung des Durchmessers $d_1$ dieses Absatzes gegenüber dem Durchmesser $d_2$ des Absatzes der Einzelmutter 426 erreicht wird.

Nach erfolgter Dreheinstellung der Einzelmuttern 424 und 426 ist daher lediglich die sacklochartige Aufnahmebohrung 412 in der Berührungsebene 422 herzustellen, woraufhin der zylindrische Sperrbolzen 412 einzusetzen ist, der dann durch axiales Verschieben des Sicherungsringes 452 aus seiner Freigabestellung in seine Sicherungsstellung gesichert wird. Bei nicht allzu hohen Genauigkeitsanforderungen kann der Sicherungsring 452 auch als Zentrierring dienen, so daß lediglich ein einziger Sperrbolzen 412 erforderlich ist.

Die in den Fig. 6A und 6B dargestellte Doppelmutter 510 unterscheidet sich von der Doppelmutter 410 gemäß Fig. 5 lediglich darin, daß der in die sacklochartige Aufnahmebohrung 514 eingesetzte Sperrbolzen 512 durch einen in Umfangsrichtung verschiebbaren Sicherungsring 552 gesichert wird. Die Breite der nunmehr zur Berührungsebene 522 symmetrischen Außenumfangsnut 554 entspricht nunmehr der Breite des Sicherungsrings 552. Wie Fig. 6B zeigt, ist der Sicherungsring 552 mit einer Kreisöffnung 560 symmetrisch zur Berührungsebene 522 versehen, deren Radius $r_1$ größer ist als der Radius $r_2$ der Aufnahmebohrung 514. Befindet sich die Kreisöffnung 560 also genau oberhalb der Aufnahmebohrung 514, so ist diese frei zugänglich. Verdreht man dagegen nach dem Einsetzen des Sperrbolzens 512 den Ring 552 in die in den Fig. 6A und 6B gezeigte Stellung, so kann der in die Aufnahmebohrung 514 eingesteckte Sperrbolzen 512 nicht mehr herausfallen. Um hierbei den Ring 552 gegen Verdrehung zu sichern, ist am Rande der Abdrehung 558 der Einzelmutter 526 eine flache zylindrische Ausnehmung 562 radial von außen eingebohrt, die zur Hälfte vom entsprechenden Rand des Ringes 552 abgedeckt wird. Nach dem Einstellen der Vorspannung wird demnach durch die Kreisöffnung 560 hindurch die Aufnahmebohrung 514 hergestellt, anschließend der Stift 512 eingesetzt und dann der Ring 552 soweit verdreht bis der Stift 512 vollständig abgedeckt ist. Durch ein Stauchen· oder Umbördeln des Randes des Rings 552 in die zylindrische Ausnehmung 562 hinein wird der Ring 552 zuverlässig gegen ein Verdrehen gesichert.

Bei der Doppelmutter 610 gemäß Fig. 7A weist die wiederum zur Berührungsebene 622 symmetrische, sacklochartige Aufnahmebohrung 614 im Bereich des Bohrungsbodens eine längs des Innenumfangs verlaufende Hinterschneidung 664 auf. Dementsprechend besitzt der vorgesehene in Fig. 7B dargestellte Sperrbolzen 612 einen Umfangswulst 666 an einem seiner Enden. Nach der Verspannung der Einzelmuttern 624 und 626 wird die zylindrische Aufnahmebohrung 614 samt Hinterschneidung 664 hergestellt und anschließend der Sperrbolzen 612 mit dem Umfangswulst 666 voraus in die Aufnahmebohrung 614 eingeschlagen, wobei kurzzeitig die beiden Einzelmuttern 624 und 626 vom Wulst 666 auseinandergedrückt werden, bis schließlich der Wulst 666 in die Hinterschneidung 664 einrastet. Der Bolzen 612 ist auf diese Weise gegen Verlust gesichert.

Der in Fig. 7C dargestellte Sperrbolzen 612' ist anfänglich rein zylindrisch ; er erhält seinen Umfangswulst 666' erst dann, wenn er gegen den Boden der Aufnahmebohrung 614 gepreßt wird. Hierzu ist dieses Bolzenende mit einem stirnseitigen Innenkegel 668 versehen. Aufgrund dieser Materialschwächung kommt es beim Einschlagen des Sperrbolzens 612' zu einer plastischen Verformung des Kegelrandes radial nach außen unter Bildung des die Hinterschneidung 664 ausfüllenden Umfangswulstes 666'. In Fig. 7C ist der Wulst 666' mit unterbrochener Linie angedeutet ebenso wie die obere Stirnfläche 670 des bei dem Stauchvorgang verkürzten Bolzens 612'.

Eine weitere Sicherungsmöglichkeit des Sperrbolzens zeigt Fig. 8. Hier ist der Sperrbolzen 712 wiederum in eine sacklochartige Aufnahmebohrung 714 in der Berührungsebene 722 der beiden Einzelmuttern 724 und 726 der Doppelmutter 710 eingesteckt. In der Doppelmutter 726 ist in axialer Richtung gegenüber der Aufnahmebohrung 714 ein radiales durchgehendes Einschraubgewinde 772 für eine als Senkkopfschraube ausgebildete Sicherungsschraube 774 versehen. Der Senkkopf 776 schließt mit seiner Oberseite im wesentlichen bündig mit dem Außenumfang der Doppelmutter 710 ab. Die kegelige Unterseite 778 des Senkkopfes 726 liegt bei eingestecktem Sperrbolzen 712 an dessen konisch verjüngtem in Fig. 8 oberen Ende 780 an und verhindert auf diese Weise, daß der Sperrbolzen 712 sich ungewollt aus seiner Aufnahmebohrung 714 radial nach außen bewegt.·

Bei der in Fig. 9 dargestellten Doppelmutter 810 ist ähnlich der Anordnung in Fig. 4 ein Zwischenring 842 vorgesehen in den ein Sperrbolzen eingeschraubt werden kann. Hier sind es jedoch zwei Sperrbolzen, nämlich ein in eine gesonderte durchgehende Aufnahmebohrung 882 der Einzelmutter 824 eingesetzter Sperrbolzen 884 sowie ein in einer ebenfalls durchgehende Aufnahmebohrung 886 der Einzelmutter 826 eingesteckter Sperrbolzen 888. Die beiden Sperrbolzen 884 und 886 entsprechen in ihrer Form dem Sperrbolzen 312 gemäß Fig. 4, liegen also auch in eingeschraubtem Zustand mit einer Schulter an der Außenumfangsfläche des Zwischenrings 842 an, so daß sie auf die Einzelmuttern 824 und 826 keine radialen Kräfte ausüben können.

Bei der Herstellung der an der Gewindespindel 820 verspannten Doppelmutter 810 kann man wiederum so vorgehen, daß wenigstens eine der Aufnahmebohrungen 882 und 886 und/oder wenigstens eines der beiden Einschraubgewinde 846 im Zwischenring 842 für die beiden Sperrbolzen 884 und 886 nach dem Verspannen hergestellt wird. Da der Zwischenring 842 aus weicherem Material wie die Einzelmuttern 824 und 826 hergestellt werden kann, ist es besonders vorteilhaft, wenn man lediglich eines der Einschraubgewinde 846 nachträglich herstellt. Hierzu kann man so vorgehen, daß man vor dem Verspannen einen der beiden Sperrbolzen 884 und 888 in die entsprechende Aufnahmebohrung 882 bzw. 886 einsteckt und in das vorbereitete Innengewinde 846 einschraubt. Anschließend können die Einzelmuttern 824 und 826 auf der Spindel 820 verspannt werden. In der gewählten Drehstellung wird durch die noch freie Aufnahmebohrung 886 bzw. 882 hindurch der Zwischenring 842 angebohrt und mit Innengewinde versehen. Dann kann auch der zweite Sperrbolzen eingeschraubt werden.

**Pantentansprüche**

1. Verfahren zur Herstellung einer auf einer Gewindespindel (20 ; 820) laufenden Doppelmutter (10 ; 110 ... 710 ; 810), bei dem man die Einzelmuttern (24, 124, ... 824 ; 26, 126 ... 826) auf der Gewindespindel zur Einstellung eines gewünschten Spiels bzw. einer gewünschten Vorspannung gegeneinander verdreht und anschließend ggf. über einen Zwischenring (342, 842) dadurch formschlüssig aneinander festlegt, daß man wenigstens einen Sperrbolzen (12, 112 ; ... 712 ; 824, 826) in die Doppelmutter einsetzt, der benachbarte Ausnehmungen (36, 38 ; ... 882, 886 und ggf. 846) der Einzelmuttern und ggf. des Zwischenrings durchsetzt, dadurch gekennzeichnet, daß man wenigstens eine der Ausnehmungen erst nach dem Verdrehen der Einzelmuttern auf der Gewindespindel herstellt.

2. Verfahren nach Anspruch 1, dadurch gekennzeichnet, daß man nach dem Verdrehen der Einzelmuttern auf der Gewindespindel zur Herstellung der wenigstens einen Ausnehmung das entsprechende Teil radial von außen her anbohrt und ggf. mit einem Einschraubgewinde für den Sperrbolzen versieht.

3. Verfahren nach Anspruch 2, dadurch gekennzeichnet, daß man nach dem Verdrehen der Einzelmuttern auf der Gewindespindel eine radiale Bohrung in der Berührungsebene beider Einzelmuttern herstellt und den Sperrbolzen in diese Bohrung einsetzt.

4. Schraubtrieb, insbesondere Kugelschraubtrieb, mit einer Gewindespindel (20) und einer auf der Gewindespindel (20) laufenden Doppelmutter (10 ; 110 ; ... 710), deren beide Einzelmuttern (24, 124, ... 724 ; 26, 126, ... 726) zur Einstellung eines gewünschten Spiels bzw. einer gewünschten Vorspannung auf der Gewindespindel (20) gegeneinander verdrehbar und zur Verhinderung einer selbsttätigen gegenseitigen Verdrehung mittels wenigstens eines in eine Ausnehmung (14 ; 114 ; ... 714) an einer der Einzelmuttern (24, 124, ... 724 ; 26, 126, ... 726) einsteckbaren im wesentlichen radialen Sperrbolzens (12 ; 112 ; ... 712) miteinander formschlüssig verbindbar sind, hergestellt nach dem Verfahren eines der Ansprüche 1 bis 3, dadurch gekennzeichnet, daß in der zur gegenseitigen Anlage kommenden Stirnfläche (34) jeder Einzelmutter (24, 124, 224, ... 724 ; 26, 126, 226, ... 726) nur je eine einzige Teilausnehmung (36) vorgesehen ist, die in der vorgesehenen Drehstellung der jeweils anderen Teilausnehmung unter Bildung der Ausnehmung (14 ; 114 ; 214 ; ... 714) für den Sperrbolzen (12 ; 112 ; 212 ; ... 712) gegenüberliegt.

5. Schraubtrieb nach Anspruch 4, dadurch gekennzeichnet, daß die im wesentlichen radial verlaufenden Teilausnehmungen (36) im wesentlichen halbzylindrisch ausgebildet sind und vorzugsweise durch Anbohren der gegeneinander verdrehten Teilmuttern (24 ; 124 ; 224 ; ... 724 ; 26 ; 126 ; 226 ; ... 726) in der Berührungsebene (22 ; 122 ; 222 ; ... 722) beider Teilmuttern gebildet sind.

6. Schraubtrieb nach Anspruch 4 oder 5, dadurch gekennzeichnet, daß mehrere, vorzugsweise zwei oder drei Ausnehmungen (14) im Umfangsbereich der Doppelmutter (10) vorgesehen sind.

7. Schraubtrieb nach Anspruch 4 oder 5, gekennzeichnet durch eine Achszentrierung beider Einzelmuttern (224, 226), vorzugsweise in Form eines Zentrierringes (242).

8. Schraubtrieb nach einem der Ansprüche 4 bis 7, dadurch gekennzeichnet, daß der Sperrbolzen (12 ; 212) in die Ausnehmung (14 ; 214) eingeklebt ist.

9. Schraubtrieb nach Anspruch 8, dadurch gekennzeichnet, daß die im wesentlichen zylindrische Ausnehmung (14 ; 214) mit einer Hinterschneidung (30) und der im wesentlichen zylindrische Sperrbolzen (12 ; 212) mit Aussparungen vorzugsweise in Form einer Umfangsnut (32) versehen ist.

10. Schraubtrieb nach einem der Ansprüche 4 bis 7, dadurch gekennzeichnet, daß der Sperrbolzen (312) einen in einen Zwischenring (342), ggf. den Zentrierring einschraubbaren Gewindeabschnitt (348) aufweist.

11. Schraubtrieb nach Anspruch 10, dadurch gekennzeichnet, daß der Zentrierring (342) von den Einzelmuttern (324, 326) umgriffen wird und daß die zwischen dem Gewindeabschnitt (348) und einem sich anschließenden durchmesservergrößerten, die Ausnehmung (314) ausfüllenden Zylinderabschnitt (350) gebildeten Schulter am Zwischenring (342) anliegt.

12. Schraubtrieb nach einem der Ansprüche 4 bis 7, gekennzeichnet durch einen die Einzelmuttern (424, 426 ; 524, 526) umgreifenden Sicherungsring (452 ; 552) zur Verlustsicherung des Sperrbolzens (412 ; 512).

13. Schraubtrieb nach Anspruch 12, dadurch gekennzeichnet, daß der Sicherungsring (452) in einer Umfangsnut (454) der Doppelmutter (410) axial verschiebbar ist zwischen einer die Ausnehmung (414) freigebenden ersten Endstellung und einer die Ausnehmung abdeckenden zweiten Endstellung.

14. Schraubtrieb nach Anspruch 13, dadurch gekennzeichnet, daß der Sicherungsring (452) in der zweiten Endstellung im Festsitz an einer (424) der Einzelmutter (424) der Einzelmutter (424, 426) festgelegt ist.

15. Schraubtrieb nach Anspruch 12, dadurch gekennzeichnet, daß der Sicherungsring (552) mit einer der Öffnung der Ausnehmung (514) angepaßten Aussparung (560) versehen und in Umfangsrichtung der Doppelmutter (510) derart verschiebbar ist, daß in einer ersten Drehstellung die Ausnehmung (514) durch die Aussparung (560) hindurch zugänglich und in einer zweiten Drehstellung vom Sicherungsring (552) abgedeckt ist.

16. Schraubtrieb nach einem der Ansprüche 12 bis 15, dadurch gekennzeichnet, daß der Sicherungsring (552) durch Prägen, z. B. Umbördeln oder Anstauchen, insbes. in der zweiten Drehstellung an einer (526) der Einzelmuttern festlegbar ist.

17. Schraubtrieb nach einem der Ansprüche 4 bis 7, dadurch gekennzeichnet, daß der Sperrbolzen (612 ; 612′) mit wenigstens einer Eingriffsausformung an seinem Außenumfang, vorzugsweise in Form eines Umfangswulstes (666 ; 666′), ausgebildet ist, und daß die Ausnehmung (614) mit einer komplementären Eingriffsausformung, ggf. in Form einer Innenumfangsnut (664), ausgebildet ist, derart, daß bei eingestecktem Sperrbolzen (612 ; 612′) die Eingriffsausformungen ineinandergreifen.

18. Schraubtrieb nach Anspruch 17, dadurch gekennzeichnet, daß der vor dem Einsetzen durchgehende zylindrische Sperrbolzen (612′) an seinem Einsteckende mit einer derartigen Materialschwächung versehen ist, insbesondere aufgrund eines Hohlkegels (668) in der Stirnfläche des Einsteckendes, daß aufgrund des Stauchens des Sperrbolzens (612′) beim Einschlagen in die Ausnehmung (614) sich die Eingriffsausformung (666′) ausbildet.

19. Schraubtrieb nach einem der Ansprüche 4 bis 7, dadurch gekennzeichnet, daß der Sperrbolzen (712) durch ein an eine (726) der Einzelmuttern festschraubbares Sicherungselement (776) gegen Verlust gesichert ist.

20. Schraubtrieb nach Anspruch 19, gekennzeichnet durch eine Sicherungsschraube (772), deren Kopf (774) am äußeren Ende (780) des in die Ausnehmung (714) eingesteckten Sperrbolzens (712) anliegt.

21. Schraubtrieb, insbesondere Kugelschraubtrieb, mit einer Gewindespindel (820) und einer auf der Gewindespindel (820) laufenden Doppelmutter (810), deren beide Einzelmuttern (824 ; 826) zur Einstellung eines gewünschten Spiels bzw. einer gewünschten Vorspannung auf der Gewindespindel (820) gegeneinander verdrehbar und zur Verhinderung einer selbsttätigen gegenseitigen Verdrehung mittels wenigstens eines in eine Ausnehmung (882 ; 886) an einer der Einzelmuttern (824 ; 826) einsteckbaren radialen Sperrbolzens (884 ; 888) miteinander formschlüssig verbindbar sind, wobei ein von den Einzelmuttern (824 ; 826) umgriffener Zwischenring (842) vorgesehen ist mit einer ersten Ausnehmung (846) in radialer Flucht mit einer durchgehenden Ausnehmung (882) einer der Einzelmuttern (824) und mit einer zweiten Ausnehmung (846) in radialer Flucht mit einer durchgehenden Ausnehmung (886) der anderen Einzelmutter (826) für je einen Sperrbolzen (884 ; 888), und wobei jeder Sperrbolzen (884 ; 888) in ein Einschraubgewinde in eine der fluchtenden Ausnehmungen (846 ; 882 ; 886) einschraubbar ist, hergestellt nach dem Verfahren eines der Ansprüche 1 bis 3, dadurch gekennzeichnet, daß die erste und zweite Ausnehmungen (846) mit dem einen Schraubgewinde versehen sind, und daß die Ausnehmungen (882, 886) der Einzelmuttern (824, 826) durchgehend zylindrisch ausgebildet sind zur Aufnahme der zylindrischen Köpfe der Sperrbolzen (884 ; 886).

## Claims

1. Method for the production of a double nut (10 ; 110 ... 710 ; 810) running on a threaded spindle (20 ; 820), in which the individual nuts (24, 124 ... 824 ; 26, 126 ... 826) are rotated in relation to one another on the threaded spindle for the setting of a desired play and/or a desired initial tension and then made fast in shape-engaging manner against one another, possibly through an intermediate ring (342, 842), by the insertion of at least one locking bolt (12, 112 ; ... 712 ; 824, 826) into the double nut, which bolt passes through adjacent apertures (36, 38 ; 882, 886 and possibly 846) of the individual nuts and possibly of the intermediate ring, characterised in that at least one of the apertures is produced only after the rotation of the individual nuts on the threaded spindle.

2. Method according to Claim 1, characterised in that after the rotation of the individual nuts on the threaded spindle, for the production of the at least one aperture the corresponding part is drilled radially from the exterior and may be provided with a screw-in threading for the locking bolt.

3. Method according to Claim 2, characterised in that after the rotation of the individual nuts on the threaded spindle a radial bore is produced in the plane of contact of the two individual nuts and the locking bolt is inserted into this bore.

4. Worm drive, especially ball worm drive, having a threaded spindle (20) and a double nut (10 ; 110 ; ... 710) running on the threaded spindle, of which the two individual nuts (24, 124 ... 724 ; 26, 126 ... 726) are rotatable in relation to one another on the threaded spindle (20) for the setting of a desired clearance or a desired initial tension and are connectable in shape-engaging manner with one another, for the prevention of self-effected mutual rotation, by means of a least one substantially radial locking bolt (12 ; 112 ; ... 712) insertable into an aperture (14 ; 114 ; ... 714) of one of the individual nuts (24, 124, ... 724 ; 26, 126, ... 726), produced according to the method of one of Claims 1 to 3, characterised in that only one single partial aperture (36) is provided in the end face (34), coming into mutual abutment, of each individual nut (24, 124, 224 ... 724 ; 26, 126, 226 ... 726) which aperture, in the intended position in rotation, lies opposite to the other partial aperture in each case, forming the aperture (14 ; 114 ; 214 ; ... 714) for the locking bolt (12 ; 112 ; 212 ; ... 712).

5. Worm drive according to Claim 4, characterised in that the substantially radially extending partial apertures (36) are made substantially semicylindrical and are preferably formed by drilling of the partial nuts (24 ; 124 ; 224 ; ... 724 ; 26 ; 226 ... 726), rotated in relation to one another, in the plane (22 ; 122 ; 222 ; ... 722) of contact of the two partial nuts.

6. Worm drive according to Claim 4 or 5, characterised in that several apertures (14), preferably two or three, are provided in the circumferential region of the double nut (10).

7. Worm drive according to Claim 4 or 5, characterised by an axial centring of the two individual nuts (224, 226), preferably in the form of a centring ring (242).

8. Worm drive according to one of Claims 4 to 7, characterised in that the locking bolt (12 ; 212) is stuck in the aperture (14 ; 214).

9. Worm drive according to Claim 8, characterised in that the substantially cylindrical aperture (14 ; 214) is provided with an undercutting (30) and the substantially cylindrical locking bolt (12 ; 212) is provided with apertures preferably in the form of a circumferential groove (32).

10. Worm drive according to one of Claims 4 to 7, characterised in that the locking bolt (312) comprises a threaded section (348) which can be screwed into an intermediate ring (342), possibly the centring ring.

11. Worm drive according to Claim 10, characterised in that the centring ring (342) is grasped around by the individual nuts (324, 326) and in that the shoulder formed between the threaded section (348) and an adjoining cylinder section (350) of enlarged diameter, filling out the aperture (314), rests on the intermediate ring (342).

12. Worm drive according to one of Claims 4 to 7, characterised by a securing ring (452 ; 552), grasping around the individual nuts (424, 426 ; 524, 526), for securing the locking bolt (412 ; 512) against loss.

13. Worm drive according to Claim 12, characterised in that the securing ring (452) is axially displaceable in a circumferential groove (454) of the double nut (410) between a first end position releasing the aperture (414) and a second end position covering the aperture.

14. Worm drive according to Claim 13, characterised in that the securing ring (452) is made fast in the second end position with firm seating on one (424) of the individual nuts (424, 426).

15. Worm drive according to Claim 12, characterised in that the securing ring (552) is provided with an aperture (560) adapted to the opening of the aperture (514) and is displaceable in the circumferential direction of the double nut (510) in such a way that in a first position in rotation the aperture (514) is accessible through the aperture (560) and in a second position in rotation it is covered by the securing ring (552).

16. Worm drive according to one of Claims 12 to 15, characterised in that the securing ring (552) can be made fast by swaging, for example crimping over or upsetting, especially in the second position in rotation, on one (526) of the individual nuts.

17. Worm drive according to one of Claims 4 to 7, characterised in that the locking bolt (612 ; 612') is formed with at least one engagement shaping on its external circumference, preferably in the form of a circumferential bead (666 ; 666'), and in that the aperture (614) is formed with a complementary engagement shaping, possibly in the form of an internal circumferential groove (664), in such a way that when the locking bolt (612 ; 612') is inserted the engagement shapings interengage.

18. Worm drive according to Claim 17, characterised in that the locking bolt (612') which is continuously cylindrical before insertion, is provided at its insertion end with a material attenuation, especially by reason of a hollow cone (668) in the end face of the insertion end, such that by reason of the upsetting of the locking bolt (612') in driving into the aperture (614) the engagement shaping (666') is formed.

19. Worm drive according to one of Claims 4 to 7, characterised in that the locking bolt (712) is secured against loss by a securing element (776) which can be screwed fast to one (726) of the individual nuts.

20. Worm drive according to Claim 19, characterised by securing screw (772) the head (774) of which abuts on the outer end (780) of the locking bolt (712) inserted into the aperture (714).

21. Worm drive, especially ball worm drive, with a threaded spindle (820) and a double nut (810) running on the threaded spindle (820), of which the two individual nuts (824 ; 826) are rotatable in relation to one another on the threaded spindle (820) for the setting of a desired play or a desired initial stress, and are connectable in shape-engaging manner with one another, for the prevention of self-effected mutual rotation, by means of at least one radial locking bolt (884 ; 888) insertable into an aperture (882 ; 886) of one of the individual nuts (824 ; 826), while an intermediate ring (842) grasped around by the individual nuts (824 ; 826) is provided having a first aperture (846) in radial alignment with a through-passing aperture (882) of one of the individual nuts (824) and with a second aperture (846) in radial alignment with a through-passing aperture (886) as the other individual nut (826), for a locking bolt (884 ; 888) in each case, and where each locking bolt (884 ; 888) is screwable into a screw-in threading in one of the aligned apertures (846 ; 882 ; 886), produced according to the method of one of Claims 1 to 3, characterised in that the first and second apertures (846) are provided with the one screw threading and in that the apertures (882, 886) of the individual nuts (824, 826) are made cylindrical throughout for the reception of the cylindrical heads of the locking bolts (884 ; 886).

## Revendications

1. Procédé d'assemblage d'un écrou double (10 ; 110 ... 710 ; 810) monté sur une broche filetée (20 ; 820), selon lequel on imprime une rotation l'un vers l'autre aux écrous individuels (24, 124, ... 824 ; 26, 126 ... 826) sur la broche filetée en vue de régler respectivement un jeu souhaité ou une précharge souhaitée, après quoi l'on assujettit ces écrous l'un à l'autre par conformation, éventuellement au moyen d'une bague intercalaire (342, 842), en insérant dans l'écrou double au moins un goujon de verrouillage (12, 112 ; ... 712 ; 824, 826) qui traverse des logements voisins (36, 38 ; 882, 886 et éventuellement 846) dans les écrous individuels et éventuellement dans la bague intercalaire, caractérisé par le fait qu'au moins l'un des logements est ménagé seulement après qu'une rotation a été imprimée aux écrous individuels sur la broche filetée.

2. Procédé selon la revendication 1, caractérisé par le fait que, pour façonner le logement prévu au minimum après la rotation imprimée aux écrous individuels sur la broche filetée, la pièce correspondante est percée radialement de l'extérieur et est éventuellement pourvue d'un taraudage destiné au goujon de verrouillage.

3. Procédé selon la revendication 2, caractérisé par le fait que, après la rotation imprimée aux écrous individuels sur la broche filetée, un perçage radial est pratiqué dans le plan de contact des deux écrous individuels, puis le goujon de verrouillage est inséré dans ce perçage.

4. Transmission par écrous, notamment par écrous à billes, comprenant une broche filetée (20) et un écrou double (10 ; 110 ; ... 710) monté sur cette broche filetée (20) et dont les deux écrous individuels (24, 124, ... 724 ; 26, 126, ... 726) peuvent être mis en rotation l'un vers l'autre sur la broche filetée (20) en vue de régler respectivement un jeu souhaité ou une précharge souhaitée, ces écrous pouvant être reliés l'un à l'autre par conformation, afin d'empêcher une rotation mutuelle automatique, à l'aide d'au moins un goujon de verrouillage (12 ; 112 ; ... 712) sensiblement radial pouvant être emboîté dans un logement (14 ; 114 ; ... 714) ménagé dans l'un des écrous individuels (24, 124, ... 724 ; 26, 126, ... 726), réalisée conformément au procédé selon l'une des revendications 1 à 3 et caractérisée par le fait qu'il est prévu à chaque fois, dans la face extrême (34) de chaque écrou individuel (24, 124, 224, ... 724 ; 26, 126, 226, ... 726) venant en contact mutuel, un seul et unique évidement partiel (36) qui, dans la position prévue prise par rotation, est opposé à l'autre évidement partiel considéré en formant le logement (14 ; 114 ; 214 ; ... 714) pour le goujon de verrouillage (12 ; 112 ; 212 ; ... 712).

5. Transmission par écrous selon la revendication 4, caractérisée par le fait que les évidements partiels (36) s'étendant sensiblement radialement sont réalisés sensiblement semi-cylindriques et sont formés, de préférence, en perçant les écrous partiels (24 ; 124 ; 224 ; ... 724 ; 26 ; 126 ; 226 ; ... 726) ayant tourné l'un vers l'autre, dans le plan de contact (22 ; 122 ; 222 ; ... 722) de ces deux écrous partiels.

6. Transmission par écrous selon la revendication 4 ou 5, caractérisée par le fait que plusieurs, de préférence deux ou trois logements (14) sont prévus dans la région périphérique de l'écrou double (10).

7. Transmission par écrous selon la revendication 4 ou 5, caractérisée par un centrage axial des deux écrous individuels (224, 226), de préférence sous la forme d'une bague de centrage (242).

8. Transmission par écrous selon l'une des revendications 4 à 7, caractérisée par le fait que le goujon de verrouillage (12 ; 212) est collé dans le logement (14 ; 214).

9. Transmission par écrous selon la revendication 8, caractérisée par le fait que le logement (14 ; 214) sensiblement cylindrique est doté d'une contre-dépouille (30) et le goujon de verrouillage (12 ; 112) sensiblement cylindrique est muni d'évidements, de préférence sous la forme d'une gorge périphérique (32).

10. Transmission par écrous selon l'une des revendications 4 à 7, caractérisée par le fait que le goujon de verrouillage (312) possède une zone filetée (348) pouvant être vissée dans une bague intercalaire (342), éventuellement dans la bague de centrage.

11. Transmission par écrous selon la revendication 10, caractérisée par le fait que la bague intercalaire (342) est entourée par les écrous individuels (324, 326) ; et par le fait que l'épaulement, formé entre la zone filetée (348) et une zone cylindrique (350) de diamètre agrandi, se raccordant à cette zone filetée et comblant le logement (314), est appliqué contre la bague intercalaire (342).

12. Transmission par écrous selon l'une des revendications 4 à 7, caractérisée par une bague d'arrêt (452 ; 552) qui entoure les écrous individuels (424, 426 ; 524, 526) pour empêcher la perte du goujon de verrouillage (412 ; 512).

13. Transmission par écrous selon la revendication 12, caractérisée par le fait que la bague d'arrêt (452) peut coulisser axialement dans une gorge circonférentielle (454) de l'écrou double (410), entre une première position extrême dégageant le logement (414) et une seconde position extrême obturant ce logement.

14. Transmission par écrous selon la revendication 13, caractérisée par le fait que la bague d'arrêt (452) est calée rigidement dans la seconde position extrême sur l'un (424) des écrous individuels (424, 426).

15. Transmission par écrous selon la revendication 12, caractérisée par le fait que la bague d'arrêt (552) est pourvue d'un orifice (560) adapté à l'ouverture du logement (514) et est montée coulissante dans le sens périphérique de l'écrou double (510), de telle manière que le logement (514) soit accessible à travers ledit orifice (560) dans une première position prise par rotation, et qu'il soit recouvert par la bague d'arrêt (552) dans une seconde position prise par rotation.

16. Transmission par écrous selon l'une des revendications 12 à 15, caractérisée par le fait que la bague d'arrêt (552) peut être assujettie, en particulier dans la seconde position prise par rotation, par emboutissage, par exemple par sertissage ou refoulement contre l'un (526) des écrous individuels.

17. Transmission par écrous selon l'une des revendications 4 à 7, caractérisée par le fait que le goujon de verrouillage (612 ; 612') est réalisé sur sa circonférence externe avec au moins une conformation de venue en prise, de préférence sous la forme d'un bourrelet périphérique (666 ; 666') et par le fait que le logement (614) est réalisé avec une conformation complémentaire de venue en prise, éventuellement sous la forme d'une dépouille circonférentielle interne (664), de telle sorte que lesdites conformations s'engagent l'une dans l'autre lorsque le goujon de verrouillage (612 ; 612') est emboîté.

18. Transmission par écrous selon la revendication 17, caractérisée par le fait que le goujon de verrouillage (612'), de forme cylindrique ininterrompue avant son insertion, est muni à son extrémité emboîtable d'un affaiblissement de matériau, produit en particulier par un cône creux (668) dans la face frontale de l'extrémité emboîtable, de telle sorte que la conformation de venue en prise (666') se forme par suite du refoulement du goujon de verrouillage (612') lorsqu'il est enfoncé par percussion dans le logement (614).

19. Transmission par écrous selon l'une des revendications 4 à 7, caractérisée par le fait qu'une perte du goujon de verrouillage (712) est empêchée par un élément d'arrêt (776) pouvant être vissé rigidement à l'un (726) des écrous individuels.

20. Transmission par écrous selon la revendication 19, caractérisée par une vis d'arrêt (772) dont la tête (774) porte contre l'extrémité externe (780) du goujon de verrouillage (712) emboîté dans le logement (714).

21. Transmission par écrous, notamment par écrous à billes, comprenant une broche filetée (820) et un écrou double (810) monté sur cette broche filetée (820) et dont les deux écrous individuels (824 ; 826) peuvent être mis en rotation l'un vers l'autre sur la broche filetée (820) en vue de régler respectivement un jeu souhaité ou une précharge souhaitée, ces écrous pouvant être reliés l'un à l'autre par conformation, afin d'empêcher une rotation mutuelle automatique, à l'aide d'au moins un goujon radial de verrouillage (884 ; 888) pouvant être emboîté dans un logement (882 ; 886) ménagé dans l'un des écrous individuels (824 ; 826), auquel cas il est prévu une bague intercalaire (842) entourée par les écrous individuels (824 ; 826) et comprenant un premier évidement (846) aligné radialement avec un logement traversant (882) dans l'un (824) des écrous individuels, ainsi qu'un second évidement (846) aligné radialement avec un logement traversant dans l'autre écrou individuel (826), pour un goujon de verrouillage respectif (884 ; 888), et chaque goujon de verrouillage (884 ; 888) peut être vissé dans un taraudage ménagé dans l'un des évidements alignés (846 ; 882 ; 886), réalisée conformément au procédé selon l'une des revendications 1 à 3 et caractérisée par le fait que les premier et second évidements (846) sont munis de l'un des taraudages ; et par le fait que les logements (882, 886) dans les écrous individuels (824, 826) sont réalisés cylindriques d'un bout à l'autre, en vue de recevoir les têtes cylindriques des goujons de verrouillage (884 ; 886).

0 087 623

FIG.1A

FIG.1B

FIG.1C

FIG.2

1

FIG.3

FIG.4

FIG.5

FIG.6A

FIG.6B

FIG.7A

FIG.7B

FIG.7C

FIG.8

FIG.9

3